# EUROPEAN PATENT SPECIFICATION

(11) **EP 1 806 976 B1**
(45) Date of publication and mention of the grant of the patent: **29.01.2014**
(21) Application number: 05805160.8
(22) Date of filing: 30.09.2005
(51) Int. Cl.: A23L 1/22, A23L 1/40

(54) **GRANULAR COOKING AID COMPRISING MICROBIAL ENCAPSULATES, AND CUBES AND TABLETS COMPRISING SUCH GRANULAR COOKING AID**
GRANULATFÖRMIGES HILFSPRODUKT FÜR DIE ZUBEREITUNG VON SPEISEN, DAS MIKROORGANISMENVERKAPSELUNGEN ENTHÄLT, SOWIE WÜRFEL UND TABLETTEN, DIE SOLCH EIN GRANULATFÖRMIGES HILFSPRODUKT FÜR DIE ZUBEREITUNG VON SPEISEN ENTHALTEN
ADJUVANT CULINAIRE GRANULAIRE RENFERMANT DES CAPSULES MICROBIENNES, ET CUBES ET PASTILLES CONTENANT UN TEL ADJUVANT CULINAIRE GRANULAIRE

(30) Priority: 22.10.2004 EP 04077910
(43) Date of publication of application: 18.07.2007
(73) Proprietor: Unilever N.V., 3013 AL Rotterdam (NL); Unilever PLC, London EC4Y 0DY (GB)
(72) Inventor: BONNET, Edouard F.J-V., Unilever R&D Vlaardingen, NL-3133 AT Vlaardingen (NL)
(74) Representative: Reijns, Tiemen Geert Pieter
(86) International application number: PCT/EP2005/010640
(87) International publication number: WO 2006/045404

(56) References cited:
- EP-A- 0 242 135
- EP-A- 0 453 316
- EP-A- 0 528 466
- WO-A-94/09653
- WO-A1-00/60950
- WO-A1-01/67871
- GB-A- 1 562 567
- GB-A- 2 184 334
- KR-A- 20040 026 939
- US-A- 4 426 397
- US-A- 5 756 136
- US-A- 5 798 252

## Description

The present invention is as defined in the claims and relates to a granular cooking aid (e.g. granulates, agglomerates or extrudates) comprising 70-99.95% (wt %) of a matrix material and 0.05-30% (wt %) of microbial capsules comprising an active. The active can comprise a flavour and/or colour imparting substance and/or vitamin. The word "granular" this encompasses granules, agglomerates, extrudates, or similar forms of particles comprising a multitude of smaller particulates, powder or crystals. The invention further relates to a process for making such granular cooking aid, as well as cubes or tablets prepared containing such granular cooking aid and a process for preparing such.

Cooking aids are well known in the foods industry, and usually are considered to encompass e.g. seasonings to flavour a dish and fixes for preparing a dish. Such cooking aids typically can comprise one or more of salt, taste enhancer, herbs, spices, flavourants, starch or starch derivative, fat, and other components. Such seasonings are used by the cook preparing the dish by sprinkling (or crumbling) it on a dish or in the cooking pot, and the function is e.g. provide a good taste or flavour to the dish. Such seasonings can be e.g. in a powder form, in a cube or tablet form (which optionally have to be crumbled in or on the dish), or in something having an intermediate size between these extremes: granules, agglomerates, or extrudates: i.e. granular material. Similar to these seasoning, the formulations can be concentrates for preparing a bouillon, soup, gravy or sauce, e.g. stock cubes, which are for the purpose of the invention herein all (next to the seasonings and fixes) referred to as "cooking aid", for brevity.

For some applications of such cooking aids it may be preferred to include an active, like a flavouring (which includes aroma and taste imparting substances) and/or colouring agent or compound capable of imparting a flavour or colour to the foodstuff to which it is added or vitamins. Such active may be added as such, or alternatively in the form of an encapsulate. Such encapsulates may provide well known benefits such as prevention of premature loss or deterioration of one or more of the actives.

It was found, however, that in some processes or process steps for making a powder into a granular material, e.g. granulation, many conventionally known encapsulates do not survive such processes or process steps well: a high proportion of encapsulates can be disrupted by shear and/or may disintegrate under the influence of temperatures achieved. Also, (depending on the technique employed) for turning a powder into a granular material the powder often needs to made in a pasty mix (or at least wetted), which can be achieved by adding moisture. Such moisture can also start to dissolve most conventional encapsulation material thus prematurely liberating the contents.

Microbial encapsulates are known from e.g. EP 85805 and EP 242135. These references disclose the use of encapsulates in e.g. copying paper and for adhering a fragrance to writing paper.

GB1562567 discloses a process for the production of a powdery solid water dispersible lipid enriched single cell microbial protein composition.

WO 00/60950 discloses a process to produce a powdery dietary supplement, comprising fermentation of milk using bacteria and yeast, filtration and drying.

US4426397 discloses a process for the production of a concentrate containing a bee product. The product may comprise yeasts as an additive.

KR 2004 0026939 discloses a method for producing a health food using Malva Verticillata leaf powder and kelp. The granular composition comprises 3%wt beer yeast.

WO01/6781 discloses a product consisting of granules having a core of dry active yeasts and a hydrophobic and homogenous cover with a melting point of between 15 and 80°C. The dry active yeasts forming the core are preferably of the species Saccharomyces Cerevisiae.

GB2184334 discloses lyophilized kefir yoghurt. It is produced by inoculating milk with a kefir starter, which is then cultured therein to thereby produce a yoghurt and lyophilizing the obtained yoghurt.

There is a need for cooking aids in granular form (e.g. granulated, agglomerated or extruded) comprising an active (such as a flavour imparting substance and/or colour imparting substance and/or vitamin), wherein the active is in such a form that it can be delivered over a prolonged time when heated in an aqueous environment and wherein such form allows granulation, agglomeration, or extrusion or other technique to create a granular component.

It has now been found that such may be achieved a cooking aid in a granular form, suitable for preparing a bouillon, broth, soup, gravy, sauce, or for use as a seasoning, the cooking aid comprising 70-99.95% (wt % based on total particulate) of a matrix material and 0.05-30% (wt % based on total particulate) of microbial capsules comprising an active. Said active is a flavour imparting substance and/or colour imparting substance and/or vitamin.

Formats for the granular cooking aid in the present invention are granulates, agglomerates or extrudates. Hence, the invention relates to the cooking aid in a granular form being a granulated, agglomerated or extrudated cooking aid. The size of the granular material according to the invention is such that at least 80% wt of the particulates have a size such that the diameter is 0.2-5 mm and the length is 1-20 mm. It should be noted the present subject matter is not restricted to granular material obtained through granulation, agglomeration, or extrudation, but also encompasses granular material containing microbial encapsulates, which granular material is obtained through other techniques to obtain a granular material of the preferred size.

The microbial encapsulation vehicle in the present invention are yeast cells. Thus, the invention relates to a cooking aid as above wherein the microbial capsules are yeast cells. Examples of yeast cells include *S*. *cerevisia.*

In order to be suitable as a cooking aid, the cooking aid preferably comprises a matrix material of which at least part of the matrix material of the particle (i.e. which makes up most of the remaining material in the particle next to the microbial capsules) preferably comprises one or more of salt, sugar, starch, maltodextrin, monosodium glutamate, fat, herbs, spices, fruit- or vegetable powder or particulates. These are materials often used in cooking aids. At least 50% by weight of the matrix of the granular cooking aid according to the present invention consists of one or more of salt, sugar, starch, maltodextrin, monosodium glutamate, fat, herbs, spices, fruit- or vegetable powder or particulates. More preferably, said amount is at least 70% by weight.

In the present invention, the microbial capsules will comprise an active, such as a flavour imparting substance, colour imparting substance or vitamin. Such active may also be present in the matrix (i.e. In the particulate outside the microbial capsule. However, it is still preferred that the concentration of the flavour and/or colour imparting substance or vitamin in the microbial encapsulate is higher than in the matrix material.

The particulate cooking aid as set out above can suitably be a granular seasoning or concentrate for preparing a soup, gravy, sauce, bouillon or broth.

Next to a use of the granular material as such, an amount of granular material may be turned into a larger object, e.g. cube, tablet ("cube or tablet" herein includes other geometric shapes, e.g. pellets, briquettes, etcetera). Such cube or tablet may be obtained by pressing or extruding. Such tablets can be suitable as a seasoning cube, or a bouillon cube or can be used to prepare a soup, gravy, sauce, bouillon or broth. One can make a cube or tablet by compressing the granular material (containing the microbial encapsulates) per se, or by mixing with another type of granular material (with or without microbial encapsulates) or with a matrix material (e.g. a powdery material, or particulate material having a size much smaller than the granules of the present invention, e.g. salt or other materials usually found in seasonings, bouillon cubes, etcetera). Thus, the invention further relates to tablets or cubes for preparing a soup, gravy, sauce, bouillon or broth or for use as a seasoning, which tablets comprise 1-100% (preferably 5-40%, both wt %) of the granular cooking aid as set out above.

The invention further relates to a process for manufacturing a granular cooking aid as set out above, which process comprises the steps of:
- providing microbial capsules comprising an active,
- mixing said microbial capsules with a matrix material comprising one or more of salt, sugar, starch, maltodextrin, monosodium glutamate, and fat and/or moisture
- subjecting said mixture of matrix material and microbial capsules to a granulation, agglomeration or extruding step or other process for preparing a granular material.

Likewise, the invention also relates to a process for preparing a shaped cooking aid article which comprise the particulate material as set out above, said process comprising the steps of:
- providing microbial capsules comprising an active,
- mixing said microbial capsules with a first matrix material comprising one or more of salt, sugar, starch, maltodextrin, monosodium glutamate and fat and/or moisture,
- subjecting said mixture of first matrix material and microbial capsules to a granulation, agglomeration or extruding step or other process for preparing a granular material,
- mixing the granular material so obtained with a second matrix material and/or a second granular material so that the final mixture comprises 5-100% (wt%) granular material which contain the microbial capsules and 0-95% (wt%) second matrix material and/or a second granular material,
- compressing the so-obtained mixture to a pressing or extruding operation to form a shaped cooking article (preferably in the form of a tablet or cube).

In the above two processes the active comprises a flavour imparting substance and/or colour imparting substance and/or vitamin.

### EXAMPLES

Yeast cells containing garlic flavour were obtained from the company Firmenich. They contained about 15% by weight of garlic flavour. Such yeast cells can be prepared by a process as set out in e.g. EP 85805 and EP 242135.

### Example 1: granular seasoning containing garlic flavour in yeast cells

A granular seasoning agent was prepared by preparing a dry mix of the ingredients as below In table 1, except for the yeast cells. This mixture was mixed for 2 minutes. To this was added 4.7% of water, to enable granulation, and mixing was continued for 17 minutes. Then the yeast cells were added, and mixing was continued for another minute. The moist mass was granulated and the granules were subsequently dried.

Next to this, a powdery mixture of the same composition containing the same yeast-encapsulated garlic flavour was prepared by repeating said process, apart from addition of water, granulation and drying. The result was a dry powder containing yeast-encapsulated garlic flavour.

**Table 1: Granular seasoning**

| Ingredient | Wt.% |
|---|---|
| Salt | 50 |
| MSG | 27 |
| Corn Starch | 10 |
| Sugar | 10 |
| Yeast cells containing garlic flavour | 2 |
| Ultra tex 4 (starch, ex National Starch) | 1 |

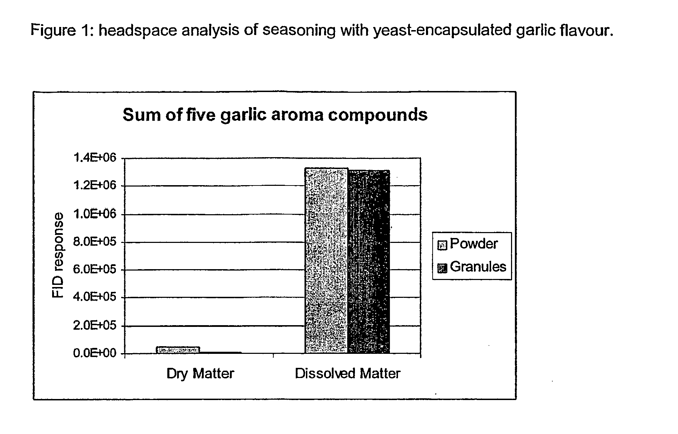

The intensity of garlic aroma in the headspace of both the dry powder and the dry granules was measured by the combination of gas chromatography with a Flame Ionisation Detector (FID). For this, the sum of 5 garlic aromas was taken, and all measurements were performed 3 times, and the mean score was noted. Apart from the dry matter (powder and granules) this was also done for the powder and granules when dissolved in hot water (just off boiling temperature). The results are set out in figure 1.

The garlic aroma measured for the dry powder (with yeast cells) is low, due to effective encapsulation. Still, some is measured, which is probably due to the encapsulation technique: during encapsulation part of the aroma will remain on the outside of the yeast cell. The garlic aroma measured on the dry granules (containing yeast cells) is also low but not zero, for the same reason as the powder. The amount measured maybe slightly lower due to some of the aroma present on the outside of the yeast cells being lost during granulation (this is not a problem, as the aim was to retain the aroma which is in the yeast cells).

The garlic aroma measured on powder and granules when immersed (and thus dissolved) in hot water is much higher than of the dry matter. The fact that for the dissolved granules an amount is measured which is very much similar to that of dissolved powder, indicates the yeast cells survive the granulation process (because if the yeast cells would be destroyed or break during granulation, most of the aroma would be lost during the granulation process, resulting in a much lower score).

### Example 2: seasoning cube with garlic flavour containing garlic flavoured granules

A matrix material for pressing cubes containing the garlic granules of example 1 was prepared with the ingredients of table 2. First, the salt, sugar and MSG were mixed for 30 seconds, then the liquid garlic flavour was added and mixed for 60 seconds, followed by adding the remaining materials of the matrix except the fat and another 60 seconds mixing. Then the fat was added and mixed for 2 minutes. To this mixture was added granules, in two amounts: 10% and 15% (percentage granules in final mixture), and mixed for 1 minute at low speed. The resulting granule-containing mixture was matured for 16 hours, and subsequently pressed to a cube using a Frewitt-Bonals press. The resulting cubes could be used as seasoning by e.g. crumbling the cubes by hand.

**Table 2: Granular seasoning**

| Ingredient | % |
|---|---|
| Salt | 50 |
| MSG | 19 |
| Garlic Powder | 10 |
| Fat Flakes | 8 |
| Sugar | 4 |
| Corn Starch | 4 |
| Maltodextrin | 4 |
| Garlic oil | 1 |

## Claims

1. Cooking aid in a granular form, suitable for preparing a bouillon, broth, soup, gravy, sauce, or for use as a seasoning, the cooking aid comprising 70-99.95% (wt %) of a matrix material and 0.05-30% (wt %) of microbial capsules comprising a flavour imparting substance and/or colour imparting substance and/or vitamin, wherein the microbial capsules are yeast cells and wherein at least 80%wt. of the granular cooking aid particles have a size such that the diameter is 0.2-5 mm and the length is 1-20 mm, and wherein the cooking aid in granular form is a granulated, agglomerated, or extruded cooking aid, and wherein at least 50% by weight of the matrix consists of one or more of salt, sugar, starch, maltodextrin, monosodium glutamate, fat, herbs, spices, fruit- or vegetable powder or particulates

2. Cooking aid according to claim 1, wherein the concentration of the flavour imparting substance and/or colour imparting substance and/or vitamin in the microbial encapsulate is higher than in the matrix material.

3. Cooking aid according to claim 1 or 2, wherein the cooking aid is a granular seasoning or concentrate for preparing a soup, gravy, sauce, bouillon or broth.

4. Tablets or cubes for preparing a soup, sauce, bouillon or broth or for use as a seasoning, which tablets comprise 5-100% of the granulated, agglomerated or extrudated cooking aid according to claim 1-3.

5. Process for manufacturing a granular cooking aid, which process comprises the steps of:
- providing microbial capsules, being yeast cells, comprising an active,
- mixing said microbial capsules with a matrix material comprising one or more of salt, sugar, starch, maltodextrin, monosodium glutamate, and fat and/or moisture
- subjecting said mixture of matrix material and microbial capsules to a granulation, agglomeration or extruding step.
and wherein at least 80%wt. of the granular cooking aid particles have a size such that the diameter is 0.2-5 mm and the length is 1-20 mm.

6. Process for preparing a shaped cooking aid article, said process comprising the steps of:
- providing microbial capsules, being yeast cells, comprising an active,
- mixing said microbial capsules with a first matrix material comprising one or more of salt, sugar, starch, maltodextrin, monosodium glutamate and fat and/or moisture,
- subjecting said mixture of first matrix material and microbial capsules to a granulation, agglomeration or extruding step or other process for preparing a granular material,
- mixing the granular material so obtained with a second matrix material and/or a second granular material so that the final mixture comprises 5-100% (wt%) granular material which contain the microbial capsules and 0-95% (wt%) second matrix material and/or a second granular material,
- compressing the so-obtained mixture to a pressing or extruding operation to form a shaped cooking article (preferably in the form of a tablet or cube).

7. Process according to claim 5 or 6, wherein the active comprises a flavour imparting substance and/or colour imparting substance and/or vitamin.

## Patentansprüche

1. Kochhilfsmittel in körniger Form, das für die Herstellung einer Boullion, Brühe, Suppe, Bratensoße, Soße oder für die Verwendung als Würze geeignet ist, wobei das Kochhilfsmittel 70 bis 99,95 % (Gew.-%) eines Matrixmaterials und 0,05 bis 30 % (Gew.-%) mikrobieller Kapseln aufweist, die eine Geschmack verleihende Substanz und/oder Farbe verleihende Substanz und/oder Vitamin aufweisen, wobei die mikrobiellen Kapseln Hefezellen sind und wobei mindestens 80 Gew.-% der Teilchen des körnigen Kochhilfsmittels eine solche Größe haben, dass der Durchmesser 0,2 bis 5 mm und die Länge 1 bis 20 mm betragen, und wobei das Kochhilfsmittel in körniger Form ein granuliertes, agglomeriertes oder extrudiertes Kochhilfsmittel ist und wobei mindestens 50 Gew.-% der Matrix aus einem oder mehreren der Folgenden bestehen: Salz, Zucker, Stärke, Maltodextrin, Mononatriumglutamat, Fett, Kräuter, Gewürze, Frucht- oder Pflanzenpulver oder -teilchen.

2. Kochhilfsmittel nach Anspruch 1,
wobei die Konzentration der Geschmack verleihenden Substanz und/oder Farbe verleihenden Substanz und/oder des Vitamins in den mikrobiellen verkapselten Produkten höher als im Matrixmaterial ist.

3. Kochhilfsmittel nach Anspruch 1 oder 2,
wobei das Kochhilfsmittel eine körnige Würze oder ein körniges Konzentrat für die Herstellung einer Suppe, Bratensoße, Soße, Bouillon oder Brühe ist.

4. Tabletten oder Würfel für die Herstellung einer Suppe, Soße, Bouillon oder Brühe oder für die Verwendung als Würze,
wobei die Tabletten 5 bis 100 % des körnigen, agglomerierten oder extrudierten Kochhilfsmittels gemäß der Ansprüche 1 bis 3 aufweisen.

5. Verfahren zum Herstellen eines körnigen Kochhilfsmittels,
wobei das Verfahren die folgenden Schritte aufweist:
- Bereitstellen von mikrobiellen Kapseln, die Hefezellen sind, die einen Wirkstoff aufweisen,
- Mischen der mikrobiellen Kapseln mit einem Matrixmaterial, das eines oder mehrere der Folgenden aufweist: Salz, Zucker, Stärke, Maltodextrin, Mononatriumglutamat und Fett und/oder Feuchtigkeit,
- Unterziehen des Gemischs von Matrixmaterial und mikrobiellen Kapseln einem Granulier-, Agglomerier- oder Extrudierschritt,
und wobei mindestens 80 Gew.-% der Teilchen des körnigen Kochhilfsmittels eine solche Größe haben, dass der Durchmesser 0,2 bis 5 mm und die Länge 1 bis 20 mm betragen.

6. Verfahren zum Herstellen eines geformten Kochhilfsmittelproduktes,
wobei das Verfahren die folgenden Schritte aufweist:
- Bereitstellen von mikrobiellen Kapseln, die Hefezellen sind, die einen Wirkstoff aufweisen,
- Mischen der mikrobiellen Kapseln mit einem ersten Matrixmaterial, das eines oder mehrere der Folgenden aufweist: Salz, Zucker, Stärke, Maltodextrin, Mononatriumglutamat und Fett und/oder Feuchtigkeit,
- Unterziehen des Gemischs von erstem Matrixmaterial und mikrobiellen Kapseln einem Granulier-, Agglomerier- oder Extrudierschritt oder einem anderen Verfahren zum Herstellen eines körnigen Materials,
- Mischen des so erhaltenen körnigen Materials mit einem zweiten Matrixmaterial und/oder einem zweiten körnigen Material, so dass das abschließende Gemisch 5 bis 100 % (Gew.-%) körniges Material, das die mikrobiellen Kapseln enthält, und 0 bis 95 % (Gew.-%) eines zweiten Matrixmaterials und/oder eines zweiten körnigen Materials aufweist,
- Pressen des so erhaltenen Gemischs in einem Press- oder Extrudierverfahren, um ein geformtes Kochprodukt (vorzugsweise in Form einer Tablette oder eines Würfels) zu erzeugen.

7. Verfahren nach Anspruch 5 oder 6,
wobei der Wirkstoff eine Geschmack verleihende Substanz und/oder Farbe verleihende Substanz und/oder Vitamin aufweist.

## Revendications

1. Aide culinaire sous forme granulaire, adaptée à la préparation d'un bouillon, d'une soupe, d'un fond de sauce, d'une sauce ou à une utilisation en tant qu'assaisonnement, l'aide culinaire comprenant 70 à 99,95 % (% en poids) d'une matière formant matrice et 0,05 à 30 % (% en poids) de capsules microbiennes comprenant une substance aromatique et/ou une substance colorante et/ou des vitamines, les capsules microbiennes étant des cellules de levure et au moins 80 % en poids des particules de l'aide culinaire granulaire ayant une taille telle que leur diamètre est de 0,2 à 5 mm et leur longueur est de 1 à 20 mm, et l'aide culinaire sous forme granulaire est une aide culinaire granulaire, agglomérée ou extrudée, et au moins 50 % en poids de la matrice se composant d'un ou de plusieurs ingrédients tels que le sel, le sucre, l'amidon, la maltodextrine, le glutamate de mono-sodium, des matières grasses, des fines herbes, des épices, de la poudre ou des particules de fruits ou de légumes.

2. Aide culinaire selon la revendication 1, dans laquelle la concentration de substance aromatique et/ou de substance colorante et/ou de vitamines dans la capsule microbienne est supérieure à celle dans la matière formant matrice.

3. Aide culinaire selon la revendication 1 ou 2, l'aide culinaire étant un assaisonnement ou un concentré granulaire pour préparer une soupe, un fond de sauce, une sauce ou un bouillon.

4. Tablettes ou cubes pour préparer une soupe, une sauce, un bouillon ou à utiliser comme assaisonnement, lesquelles tablettes comprennent 5 à 100 % d'aide culinaire granulaire, agglomérée ou extrudée selon les revendications 1 à 3.

5. Procédé pour fabriquer une aide culinaire granulaire, lequel procédé comprend les étapes consistant à :
- fournir des capsules microbiennes, à savoir des cellules de levure, comprenant une substance active,
- mélanger lesdites capsules microbiennes avec une matière formant matrice comprenant un ou plusieurs ingrédients tels que le sel, le sucre, l'amidon, la maltodextrine, le glutamate de mono-sodium, des matières grasses et/ou de l'humidité,
- soumettre ledit mélange de matière formant matrice et de capsules microbiennes à une étape de granulation, d'agglomération ou d'extrusion,
et au moins 80 % en poids des particules d'aide culinaire granulaire ayant une taille telle que leur diamètre est de 0,2 à 5 mm et leur longueur est de 1 à 20 mm.

6. Procédé pour préparer un article du type aide culinaire façonné, ledit procédé comprenant les étapes consistant à :
- fournir des capsules microbiennes, à savoir des cellules de levure, comprenant une substance active,
- mélanger lesdites capsules microbiennes avec une première matière formant matrice comprenant un ou plusieurs ingrédients tels que le sel, le sucre, l'amidon, la maltodextrine, le glutamate de mono-sodium, des matières grasses et/ou de l'humidité,
- soumettre ledit mélange composé de la première matière formant matrice et des capsules microbiennes à une étape de granulation, d'agglomération ou d'extrusion ou à tout autre procédé pour préparer une matière granulaire,
- mélanger la matière granulaire ainsi obtenue avec une seconde matière formant matrice et/ou avec une seconde matière granulaire, de telle sorte que le mélange final comprenne 5 à 100 % (% en poids) de matière granulaire contenant les capsules microbiennes et 0 à 95 % (% en poids) de la seconde matière formant matrice et/ou de la seconde matière granulaire,
- comprimer le mélange ainsi obtenu lors d'une opération de pressage ou d'extrusion pour former un article culinaire façonné (de préférence sous forme de tablette ou de cube).

7. Procédé selon la revendication 5 ou 6, dans lequel la substance active comprend une substance aromatique et/ou une substance colorante et/ou des vitamines.
